# EUROPEAN PATENT APPLICATION

(11) **EP 4 579 859 A1**
(43) Date of publication of application: **02.07.2025**
(21) Application number: 23923345.5
(22) Date of filing: 23.02.2023
(51) Int. Cl.: H01M 10/058, H01M 10/0525, H01M 50/403, H01M 4/13

(54) **SECONDARY BATTERY AND ELECTRICAL APPARATUS**

(71) Applicant: Ningde Amperex Technology Limited, Ningde, Fujian 352100 (CN)
(72) Inventor: YAN, Dongyang, Ningde, Fujian 352100 (CN); ZENG, Qiao, Ningde, Fujian 352100 (CN); JIANG, Nan, Ningde, Fujian 352100 (CN)
(74) Representative: Icosa
(86) International application number: PCT/CN2023/077910
(87) International publication number: WO 2024/174168

(57) **Abstract**

A secondary battery and an electrical apparatus are provided. The secondary battery includes an electrode assembly (1) and an electrolyte. The electrode assembly (1) includes a positive electrode plate (2), a negative electrode plate (3), and a separator (4). The separator (4) includes a substrate layer (41) and a first adhesive layer (42). The substrate layer (41) includes a third surface (411) and a fourth surface (412) opposite each other. The third surface (411) faces the negative electrode plate (3). The first adhesive layer (42) is disposed on the third surface (411) and is of a striped structure. A part of the separator (4) extending beyond the negative electrode plate (3) is defined as a separator extension part (5). The first adhesive layer (42) is at least partially located on the separator extension part (5). A peel strength between the separator (4) and the first negative electrode material layer (32) is a N/m, and a peel strength between the first negative electrode material layer (32) and the negative electrode current collector (31) is b N/m, where 6.0≤a≤15.0, and a<b. Ion transport channels and electron transport channels between the separator (4) and the electrode plate can be synergistically improved, reducing risks of lithium precipitation at the negative electrode plate (3) of the secondary battery and formation of a dead lithium area at the negative electrode plate (3), thereby enhancing safety of the secondary battery.

## Description

### TECHNICAL FIELD

This application relates to the electrochemistry field, and in particular, to a secondary battery and an electrical apparatus.

### BACKGROUND

Secondary batteries, such as lithium-ion batteries, have been widely used in the field of consumer electronics by virtue of their characteristics such as high specific energy, high working voltage, low self-discharge rate, small size, and light weight. With the wide use of lithium-ion batteries, the market imposes increasingly high requirements for performance of lithium-ion batteries.

During use of lithium-ion batteries, high requirements are imposed for post-cycling reliability of lithium-ion batteries. Specifically, it is required that loss in a capacity percentage of the lithium-ion battery remains low while safety risks associated with lithium precipitation at a negative electrode are minimized.

### SUMMARY

Objectives of this application are to provide a secondary battery and an electrical apparatus, to reduce a risk of lithium precipitation at a negative electrode plate and enhance safety and reliability of the secondary battery.

A first aspect of this application provides a secondary battery, including an electrode assembly and an electrolyte. The electrode assembly includes a positive electrode plate, a negative electrode plate, and a separator, the separator is sandwiched between the positive electrode plate and the negative electrode plate to electrically insulate the positive electrode plate from the negative electrode plate, the negative electrode plate includes a negative electrode current collector and a first negative electrode material layer, the negative electrode current collector includes a first surface and a second surface opposite to each other, the first negative electrode material layer is disposed on the first surface; the separator includes a substrate layer and a first adhesive layer, the substrate layer includes a third surface and a fourth surface opposite to each other, the third surface faces the negative electrode plate, the first adhesive layer is disposed on the third surface and is of a striped structure, a part of the separator extending beyond the negative electrode plate is defined as a separator extension part, the first adhesive layer is at least partially located on the separator extension part, a peel strength between the separator and the first negative electrode material layer is a N/m, and a peel strength between the first negative electrode material layer and the negative electrode current collector is b N/m, where 6.0≤a≤15.0, and a<b.

The beneficial effects of the embodiments of this application are as follows. In this application, the adhesive layer in a striped structure is disposed on one surface of the separator opposite to the negative electrode plate; and the peel strength a N/m between the separator and the first negative electrode material layer, the peel strength b N/m between the first negative electrode material layer and the negative electrode current collector, and the relationship between a and b are adjusted to satisfy the ranges in this application. This can synergistically improve ion transport channels and electron transport channels between the separator and the electrode plate, reducing risks of lithium precipitation at the negative electrode plate of the secondary battery and formation of a dead lithium area at the negative electrode plate, thereby enhancing safety of the secondary battery.

In an embodiment of this application, 12.0≤b≤25.0. This helps reduce the risks of lithium precipitation and the formation of the dead lithium area at the negative electrode plate of the secondary battery, thereby enhancing safety of the secondary battery.

In an embodiment of this application, in a thickness direction of the separator, a thickness of the first adhesive layer is 0.2 µm to 4.0 µm. This helps reduce the risks of lithium precipitation and the formation of the dead lithium area at the negative electrode plate of the secondary battery, thereby enhancing safety of the secondary battery.

In an embodiment of this application, the first adhesive layer includes a plurality of stripes, and in an arrangement direction of the plurality of stripes, a dimension of the stripe is 800 µm to 1,000 µm, and a spacing between the stripes is 400 µm to 500 µm. This facilitates continuous entry of a free electrolyte in the secondary battery into two ends of the electrode assembly during cycling and arrival at an edge of an interface between the negative electrode and the separator, reducing the risks of lithium precipitation and the formation of the dead lithium area at the negative electrode plate of the secondary battery, thereby enhancing safety of the secondary battery.

In an embodiment of this application, the first adhesive layer includes a first adhesive; the substrate layer is a polymer film, a multilayer polymer film, or a non-woven fabric made from any one of the following polymers or a mixture of two or more of the following: polyethylene, polypropylene, polyethylene terephthalate, polybutylene terephthalate, poly(p-phenylene terephthalamide), polyester, polyacetal, polyamide, polycarbonate, polyimide, polyether-ether-ketone, polyetherketoneketone, polyetherimide, polyamideimide, polybenzimidazole, polyethersulfone, polyphenylene oxide, cycloolefin copolymer, polyphenylene sulfide, or polyvinyl naphthalene; and the first adhesive includes at least one of homopolymers or copolymers of vinylidene fluoride, hexafluoropropylene, ethylene, propylene, vinyl chloride, allyl chloride, acrylic acid, acrylate, styrene, butadiene, and acrylonitrile. The foregoing adhesive and substrate layer materials are used to help enhance interfacial adhesion performance of the first adhesive layer, thereby enhancing the safety of the secondary battery.

In an embodiment of this application, the first adhesive layer further includes inorganic particles, where the inorganic particles include at least one of boehmite, magnesium hydroxide, aluminum oxide, titanium dioxide, silicon dioxide, zirconium dioxide, tin dioxide, magnesium oxide, zinc oxide, barium sulfate, boron nitride, or aluminum nitride. This helps improve strength of the first adhesive layer, thereby enhancing stability of the secondary battery.

In an embodiment of this application, the separator further includes a second adhesive layer, the fourth surface faces the positive electrode plate, and the second adhesive layer is disposed on the fourth surface and is of a striped structure. This facilitates continuous entry of a free electrolyte in the secondary battery into two ends of the electrode assembly during cycling, reducing the risks of lithium precipitation and the formation of the dead lithium area at the negative electrode plate of the secondary battery, thereby enhancing safety of the secondary battery.

In an embodiment of this application, the secondary battery satisfies at least one of the following: (1) 8.0≤a≤12.0 and 15.0≤b≤20.0; or (2) in a thickness direction of the separator, a thickness of the first adhesive layer is 1.0 µm to 3.0 µm. This helps reduce the risks of lithium precipitation and the formation of the dead lithium area at the negative electrode plate of the secondary battery, thereby enhancing safety of the secondary battery.

In an embodiment of this application, the first negative electrode material layer includes a negative electrode active material and a second adhesive; the negative electrode active material includes at least one of a carbon material, a lithium titanate material, or a silicon material; and the second adhesive includes at least one of polyacrylate, polyamide, polyimide, polyamide-imide, polyvinylidene fluoride, styrene-butadiene rubber, sodium alginate, polyvinyl alcohol, polytetrafluoroethylene, polyacrylonitrile, lithium carboxymethyl cellulose, sodium carboxymethyl cellulose, or potassium carboxymethyl cellulose. The foregoing negative electrode active material and second adhesive are used to help enhance interfacial adhesion performance of the negative electrode plate, reducing the risks of lithium precipitation and the formation of the dead lithium area at the negative electrode plate of the secondary battery, thereby enhancing safety of the secondary battery.

In an embodiment of this application, the first negative electrode material layer includes a negative electrode active material layer and a conductive adhesive layer that are stacked together, the conductive adhesive layer is located between the negative electrode active material layer and the negative electrode current collector, the conductive adhesive layer includes a conductive agent and a third adhesive, the conductive agent includes at least one of conductive carbon black, carbon nanotubes, or graphene; and the third adhesive includes at least one of polyacrylate, polyamide, polyimide, polyamide-imide, polyvinylidene fluoride, styrene-butadiene rubber, sodium alginate, polyvinyl alcohol, polytetrafluoroethylene, polyacrylonitrile, lithium carboxymethyl cellulose, sodium carboxymethyl cellulose, or potassium carboxymethyl cellulose. The foregoing structure helps further improve the interfacial adhesion performance and conductivity of the negative electrode plate, thereby improving cycling performance of the secondary battery.

In an embodiment of this application, a dimension by which the separator extension part extends beyond the negative electrode plate is d mm, where 0.5≤d≤3.0. This helps lower manufacturing precision for the secondary battery, thereby reducing production costs; reduce a risk of short-circuit due to thermal shrinkage of the separator at a high temperature; and improve an energy density of secondary battery.

In an embodiment of this application, the separator extension part does not overlap with the negative electrode plate in a thickness direction of the electrode assembly. The foregoing structure helps reduce the thickness of the electrode assembly, thereby improving the energy density of the secondary battery.

In an embodiment of this application, the electrode assembly is of a wound structure, and the separator extension part extends beyond the separator in a direction of a winding central axis of the electrode assembly; or in an embodiment of this application, the electrode assembly is of a laminated structure, and the separator extension part extends beyond the separator in a first direction, where the first direction is perpendicular to a thickness direction of the electrode assembly. The foregoing structure helps reduce the risks of lithium precipitation and the formation of the dead lithium area at the negative electrode plate of the secondary battery that is of a wound structure or a laminated structure, thereby enhancing safety of the secondary battery.

In an embodiment of this application, the secondary battery further includes a packaging bag, the electrode assembly and the electrolyte is contained within the packaging bag, and the electrolyte is at least partially located on an inner surface of the packaging bag. This helps maintain an appropriate amount of the free electrolyte in the packaging bag, thereby balancing the cycling performance and safety performance of the secondary battery.

A second aspect of this application provides an electrical apparatus that includes the secondary battery according to any of the foregoing embodiments and exhibits good safety performance.

This application provides a secondary battery and an electrical apparatus. A separator of the secondary battery includes a substrate layer and a first adhesive layer. A peel strength a N/m between the separator and a first negative electrode material layer and a peel strength b N/m between the first negative electrode material layer and a negative electrode current collector are synergistically adjusted to satisfy that 6.0≤a≤15.0 and a<b. This can synergistically improve ion transport channels and electron transport channels between the separator and an electrode plate, reducing risks of lithium precipitation at a negative electrode plate of the secondary battery and formation of a dead lithium area at the negative electrode plate, thereby enhancing safety of the secondary battery.

### BRIEF DESCRIPTION OF DRAWINGS

The accompanying drawings described herein are intended for better understanding of this application, and constitute a part of this application. Exemplary embodiments and description thereof in this application are intended to illustrate this application and do not constitute any improper limitations on this application.
FIG. 1 is a schematic structural diagram of an electrode assembly according to an embodiment of this application;
FIG. 2 is a schematic structural diagram of an electrode assembly according to another embodiment of this application;
FIG. 3 is a schematic structural diagram of an electrode assembly according to still another embodiment of this application;
FIG. 4 is a schematic structural diagram of a first adhesive layer according to an embodiment of this application;
FIG. 5 is a schematic structural diagram of a first adhesive layer according to another embodiment of this application;
FIG. 6 is a schematic structural diagram of a separator according to an embodiment of this application;
FIG. 7 is a schematic structural diagram of an electrode assembly according to a fourth embodiment of this application;
FIG. 8 is a schematic structural diagram of a first negative electrode material layer according to an embodiment of this application;
FIG. 9 is a schematic structural diagram of an electrode assembly according to a fifth embodiment of this application;
FIG. 10 is a schematic structural diagram of an electrode assembly according to a sixth embodiment of this application;
FIG. 11 is a schematic structural diagram of a secondary battery according to an embodiment of this application; and
FIG. 12 is a schematic structural diagram of an electrode assembly according to Comparative example 1.

### Reference signs:

1. electrode assembly; 2. positive electrode plate; 3. negative electrode plate; 4. separator; 5. separator extension part; 6. stripe; 7. electrolyte; 8. packaging bag; 31. negative electrode current collector; 32. first negative electrode material layer; 41. substrate layer; 42. first adhesive layer; 43. second adhesive layer; 44. third adhesive layer; 45. fourth adhesive layer; 46. inorganic particle layer; 311. first surface; 312. second surface; 321. negative electrode active material layer; 322. conductive adhesive layer; 411. third surface; 412. fourth surface; and C. winding central axis.

### DETAILED DESCRIPTION

To make the objectives, technical solutions, and advantages of this application more comprehensible, the following describes this application in detail with reference to accompanying drawings and embodiments. It is clear that the described embodiments are merely some but not all of the embodiments of this application.

It should be noted that in the content of this application, an example in which a lithium-ion battery is used as a secondary battery is used to illustrate this application. However, the secondary battery of this application is not limited to the lithium-ion battery. Specific technical solutions are as follows.

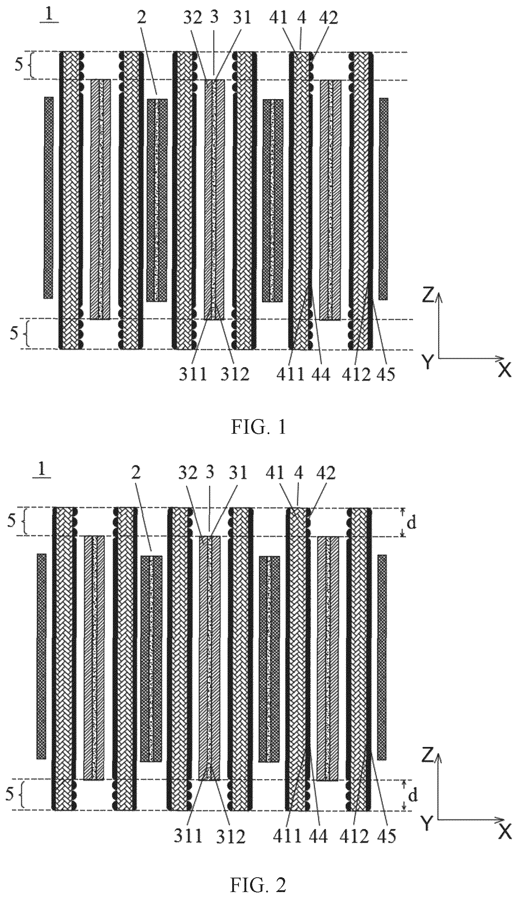

A first aspect of this application provides a secondary battery, including an electrode assembly 1 and an electrolyte. As shown in FIG. 1, a thickness direction of a separator 4 is defined as an X direction, and two directions perpendicular to the X direction are defined as a Y direction and a Z direction, with the Y direction and the Z direction perpendicular to each other. An electrode assembly 1 includes a positive electrode plate 2, a negative electrode plate 3, and a separator 4. When viewed in the Y direction, the separator 4 is sandwiched between the positive electrode plate 2 and the negative electrode plate 3 to electrically insulate the positive electrode plate 2 from the negative electrode plate 3. The electrode assembly 1 in this application can be either a wound structure or a laminated structure.

The negative electrode plate 3 includes a negative electrode current collector 31 and a first negative electrode material layer 32. It should be understood that the negative electrode current collector 31 includes two opposite surfaces, namely, a first surface 311 and a second surface 312. A first negative electrode material layer 32 is disposed on the first surface 311, and the first negative electrode material layer 32 includes a negative electrode active material.

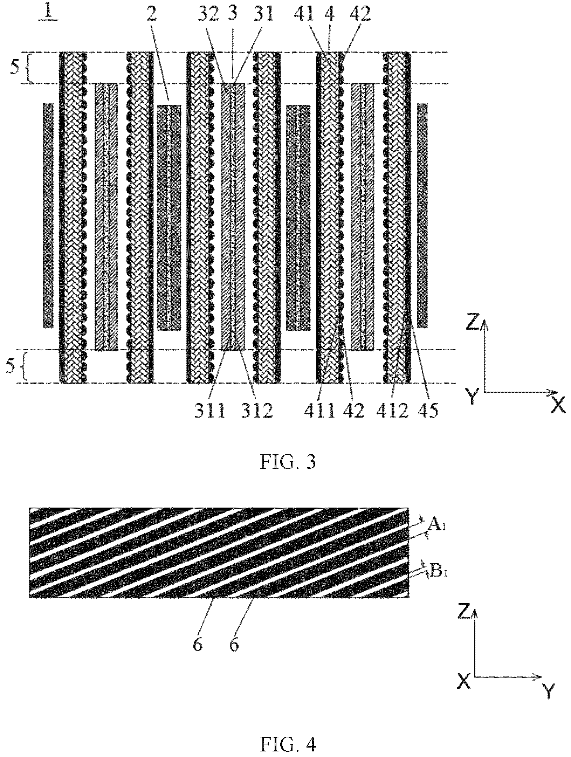

The separator 4 includes a substrate layer 41 and a first adhesive layer 42. It should be understood that the substrate layer 41 has two opposite surfaces, namely, a third surface 411 and a fourth surface 412. The third surface 411 faces the negative electrode plate 3. The first adhesive layer 42 is disposed on the third surface 411, and the first adhesive layer 42 is of a striped structure. A part of the separator 4 extending beyond the negative electrode plate 3 is defined as a separator extension part 5, and the first adhesive layer 42 is at least partially located in the separator extension part 5. In an embodiment, with reference to FIG. 1, the first adhesive layer 42 is partially located in the separator extension part 5 and partially in an area of the separator 4 not extending beyond the negative electrode plate 3. Alternatively, in another embodiment, with reference to FIG. 2, the first adhesive layer 42 is entirely located in the separator extension part 5. Alternatively, in another embodiment, with reference to FIG. 3, part of the first adhesive layer 42 is located in the separator extension part 5, and another part is located in the area of the separator 4 not extending beyond the negative electrode plate 3.

From FIG. 1, it can also be learned that the third surface 411 has a third adhesive layer 44. The third adhesive layer 44 may be located in an area of the third surface 411 without the first adhesive layer 42; and the fourth surface 412 has a fourth adhesive layer 45. The third adhesive layer 44 and the fourth adhesive layer 45 can be uniform layered structures.

In this application, a peel strength between the separator 4 and the first negative electrode material layer 32 is a N/m, and a peel strength between the first negative electrode material layer 32 and the negative electrode current collector 31 is b N/m, where 6.0≤a≤15.0, and a<b. In some embodiments, 8.0≤a≤12.0. The inventors have found through research that during cycling of a lithium-ion battery, increasing impedance at various contact interfaces within the battery causes kinetic losses, leading to issues such as purple spots, black spots, and lithium precipitation at the negative electrode interface. Each negative electrode material layer has two surfaces: one surface faces the separator to form an interface between the negative electrode and the separator, and the other surface faces the negative electrode current collector to form an interface between the negative electrode material layer and negative electrode current collector. The interface between the negative electrode material layer and the negative electrode current collector receives charges quickly from the negative electrode current collector, resulting in less polarization compared with the interface between the negative electrode and the separator. Therefore, after cycling, lithium precipitation usually occurs in the lithium-ion battery at the interface between the negative electrode and the separator. Therefore, the interface needs to be optimized to reduce lithium precipitation. To mitigate the polarization at the interface between the negative electrode and the separator, a speed at which ions in ion channels are conducted to the interface between the negative electrode and the separator needs to match a speed at which electrons in the electron channels arrive at the interface between the negative electrode and the separator. This matching prevents excessive polarization caused by a significant difference between the two speeds. However, the inventors have further found that improving solely the ion channels cannot eliminate growth of purple spots or black spots from the bottom of the negative electrode plate in the lithium-ion battery (that is, formation of a dead lithium area where re-intercalation cannot reversibly occur), and improving solely the electron channels cannot eliminate lithium precipitation at a surface of the negative electrode plate in the middle of the lithium-ion battery.

In this application, the first adhesive layer is disposed on the third surface and is of a striped structure, with the first adhesive layer at least partially located on the separator extension part. This structure facilitates continuous entry of free electrolyte in the lithium-ion battery into both ends of the electrode assembly during cycling and arrival at an edge of the interface between the negative electrode and the separator, to conduct the free electrolyte. The peel strength between the first negative electrode material layer and the negative electrode current collector is synergistically adjusted to satisfy the foregoing range. This can alleviate increased polarization due to poor interfacial adhesion caused by an excessively low interfacial adhesion force, and mitigate the problem that the electrolyte cannot infiltrate into the interface from the edge of the interface during cycling due to an excessively small gap (gap) resulted by an excessively high interfacial adhesion force. The peel strength between the separator and the first negative electrode material layer and the peel strength between the first negative electrode material layer and the negative electrode current collector are synergistically adjusted to satisfy the range specified in this application. For the negative electrode material layer, this helps reduce a risk that the negative electrode material layer first detaches from the negative electrode current collector under pulling of the negative electrode plate due to excessively strong adhesion of the separator during cycling. This also helps maintain good conductivity of the interface between the negative electrode and the separator, and reduce the risk that purple spots or black spots generate at the bottom of the negative electrode plate. The solution provided in this application can synergistically improve the ion transport channels and the electron transport channels between the separator and the electrode plate, reducing the risks of lithium precipitation and the formation of the dead lithium area at the negative electrode plate of the lithium-ion battery, thereby enhancing safety of the lithium-ion battery.

In some embodiments of this application, 12.0≤b≤25.0, preferably, 15.0≤b≤25.0, and further preferably, 15.0≤b≤20.0. The peel strength between the first negative electrode material layer and the negative electrode current collector is adjusted to satisfy the foregoing range, to help reduce the risks of lithium precipitation and the formation of the dead lithium area at the negative electrode plate of the lithium-ion battery, thereby enhancing safety of the lithium-ion battery.

In some embodiments of this application, in a thickness direction of the separator 4 (that is, the X direction), a thickness of the first adhesive layer 42 is 0.2 µm to 4.0 µm, preferably, 1.0 µm to 3.0 µm. The thickness of the first adhesive layer is adjusted to satisfy the foregoing range, to help reduce the risks of lithium precipitation and the formation of the dead lithium area at the negative electrode plate of the lithium-ion battery, thereby enhancing safety of the lithium-ion battery.

In some embodiments of this application, with reference to FIG. 4, the first adhesive layer 42 includes a plurality of stripes 6. In an arrangement direction of the plurality of stripes 6, a dimension A₁ of the stripe 6 is 800 µm to 1,000 µm, and a spacing B₁ between the stripes 6 is 400 µm to 500 µm. The foregoing structure facilitates continuous entry of the free electrolyte in the lithium-ion battery into two ends of the electrode assembly during cycling and arrival at an edge of the interface between the negative electrode and the separator, reducing the risks of lithium precipitation and the formation of the dead lithium area at the negative electrode plate of the lithium-ion battery, thereby enhancing safety of the lithium-ion battery.

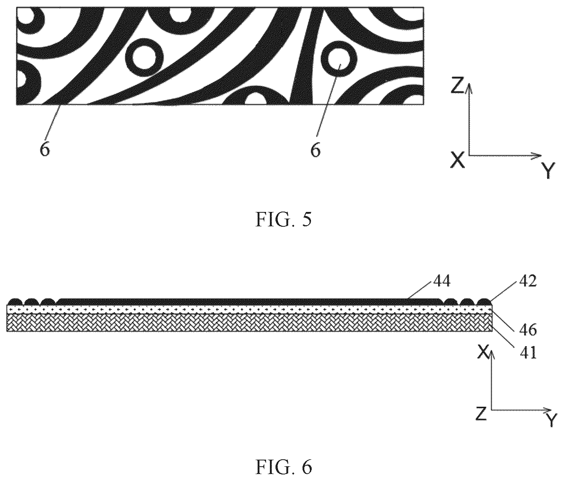

A shape of the stripe 6 is not particularly limited in this application, as long as the objectives of the invention of this application can be achieved. For example, the shapes of the stripes 6 include at least one of dot, line, strip, circle, ring, oval, polygon, or an irregular shape. In one embodiment, as shown in FIG. 5, the shapes of the stripes 6 in this application include ring, strip, and irregular shapes.

In some embodiments of this application, the first adhesive layer includes a first adhesive. A type of the first adhesive is not particularly limited in this application, as long as the objectives of the invention of this application can be achieved. For example, the first adhesive includes at least one of homopolymers or copolymers of vinylidene fluoride, hexafluoropropylene, ethylene, propylene, vinyl chloride, allyl chloride, acrylic acid, acrylate, styrene, butadiene, and acrylonitrile.

A material of the substrate layer is not particularly limited in this application, as long as the objectives of the invention of this application can be achieved. For example, the substrate layer is a polymer film, a multilayer polymer film, or a non-woven fabric made from any one of the following polymers or a mixture of two or more of the following: polyethylene, polypropylene, polyethylene terephthalate, polybutylene terephthalate, poly(p-phenylene terephthalamide), polyester, polyacetal, polyamide, polycarbonate, polyimide, polyether-ether-ketone, polyetherketoneketone, polyetherimide, polyamideimide, polybenzimidazole, polyethersulfone, polyphenylene oxide, cycloolefin copolymer, polyphenylene sulfide, or polyvinyl naphthalene.

In some embodiments of this application, the first adhesive layer 42 further includes inorganic particles, helping enhance the strength of the first adhesive layer, thereby enhancing stability of the lithium-ion battery. In other embodiments of this application, an inorganic particle layer 46 is between the substrate layer 41 and the first adhesive layer 42. For example, as shown in FIG. 6, the inorganic particle layer 46 is disposed on a surface of the substrate layer 41, with the first adhesive layer 42 and the third adhesive layer 44 disposed on the surface of the inorganic particle layer 46. Types of inorganic particles are not particularly limited in this application, as long as the objectives of the invention of this application can be achieved. For example, the inorganic particles include at least one of boehmite, magnesium hydroxide, aluminum oxide, titanium dioxide, silicon dioxide, zirconium dioxide, tin dioxide, magnesium oxide, zinc oxide, barium sulfate, boron nitride, or aluminum nitride.

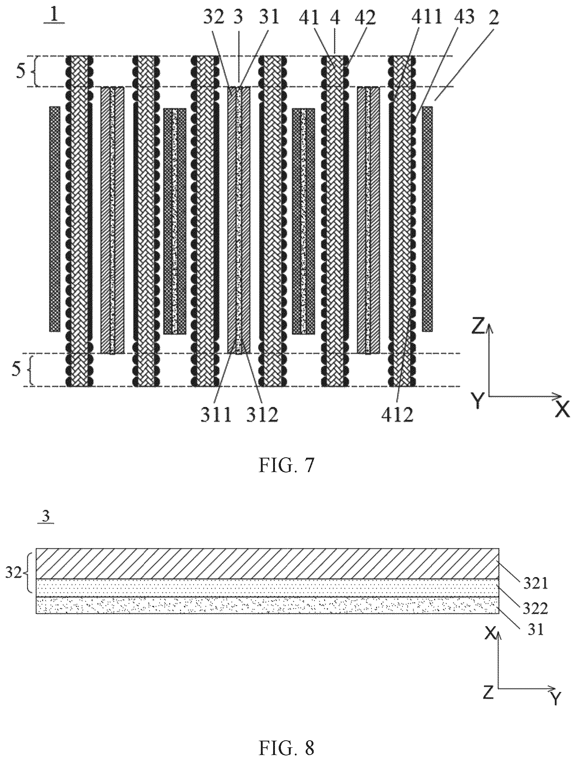

In some embodiments of this application, as shown in FIG. 7, the separator 4 further includes a second adhesive layer 43. The fourth surface 412 faces the positive electrode plate 2, and the second adhesive layer 43 is disposed on the fourth surface 412 and is of a striped structure. The foregoing structure facilitates the continuous entry of the free electrolyte in the lithium-ion battery into two ends of the electrode assembly during cycling, reducing the risks of lithium precipitation and the formation of the dead lithium area at the negative electrode plate of the lithium-ion battery, thereby enhancing safety of the lithium-ion battery.

In some embodiments of this application, the first negative electrode material layer includes a negative electrode active material and a second adhesive. The negative electrode active material includes at least one of a carbon material, a lithium titanate material, or a silicon material. The second adhesive is not particularly limited in this application, as long as the objectives of the invention of this application can be achieved. For example, the second adhesive may include at least one of polyacrylate, polyamide, polyimide, polyamide-imide, polyvinylidene fluoride, styrene-butadiene rubber, sodium alginate, polyvinyl alcohol, polytetrafluoroethylene, polyacrylonitrile, lithium carboxymethyl cellulose, sodium carboxymethyl cellulose, or potassium carboxymethyl cellulose. The negative electrode active material and the second adhesive help enhance interfacial adhesion performance of the negative electrode plate, reducing the risks of lithium precipitation and the formation of the dead lithium area at the negative electrode plate of the lithium-ion battery, thereby enhancing safety of the lithium-ion battery.

In some embodiments of this application, based on a mass of the first negative electrode active material layer, a mass percentage of the negative electrode active material is 95.0% to 99.0%, a mass percentage of the second adhesive is 0.5% to 3.0%, a mass percentage of a dispersant is 0.5% to 1.5%, and a mass percentage of a conductive agent is 0% to 1.0%. The amounts of the negative electrode active material, the second adhesive, the dispersant, and the conductive agent are adjusted to satisfy the foregoing ranges. This helps enhance the interfacial adhesion performance of the negative electrode plate, reducing the risks of lithium precipitation and the formation of the dead lithium area at the negative electrode plate of the lithium-ion battery, thereby enhancing safety of the lithium-ion battery.

In some embodiments of this application, as shown in FIG. 8, the first negative electrode material layer 32 includes a negative electrode active material layer 321 and a conductive adhesive layer 322 that are stacked together. The conductive adhesive layer 322 is located between the negative electrode active material layer 321 and the negative electrode current collector 31. The conductive adhesive layer 322 includes a conductive agent and a third adhesive. The conductive agent includes at least one of conductive carbon black, carbon nanotubes, or graphene. The third adhesive is not particularly limited in this application, as long as the objectives of the invention of this application can be achieved. For example, the third adhesive may include at least one of polyacrylate, polyamide, polyimide, polyamide-imide, polyvinylidene fluoride, styrene-butadiene rubber, sodium alginate, polyvinyl alcohol, polytetrafluoroethylene, polyacrylonitrile, lithium carboxymethyl cellulose, sodium carboxymethyl cellulose, or potassium carboxymethyl cellulose. The foregoing structure helps further improve the interfacial adhesion performance and conductivity of the negative electrode plate, thereby improving the cycling performance of the lithium-ion battery.

In some embodiments of this application, with reference to FIG. 2, a dimension by which the separator extension part 5 extends beyond the negative electrode plate 3 is d mm, where 0.5≤d≤3.0. The inventors have found through research that adjusting the dimension by which the separator extension part 5 extends beyond the negative electrode plate 3 to satisfy the foregoing range helps lower manufacturing precision for the lithium-ion battery, thereby reducing production costs; reduce the risk of short-circuit due to thermal shrinkage of the separator at a high temperature; and improve the energy density of lithium-ion battery.

In some embodiments of this application, with reference to FIG. 1, the separator extension part 5 does not overlap with the negative electrode plate 3 in a thickness direction of the electrode assembly 1. The foregoing structure helps reduce the thickness of the electrode assembly, thereby improving an energy density of the lithium-ion battery.

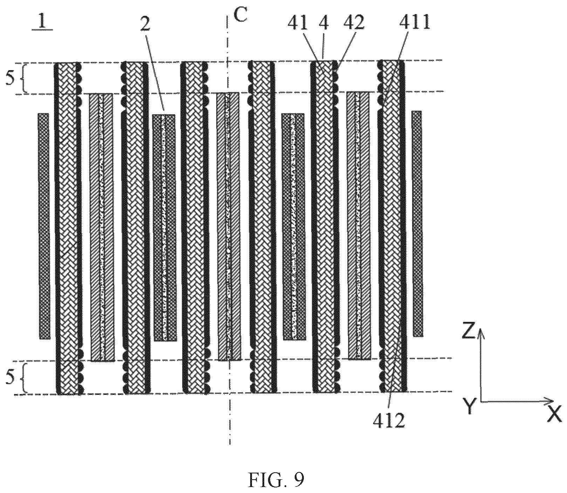

In some embodiments of this application, as shown in FIG. 9, the electrode assembly 1 is of a wound structure, and the separator extension part 5 extends beyond the separator 4 in a direction of a winding central axis C of the electrode assembly 1. This structure can synergistically improve the ion transport channels and the electron transport channels between the separator and the electrode plate, reducing the risks of lithium precipitation and the formation of the dead lithium area at the negative electrode plate of the lithium-ion battery in the wound structure, thereby enhancing safety of the lithium-ion battery.

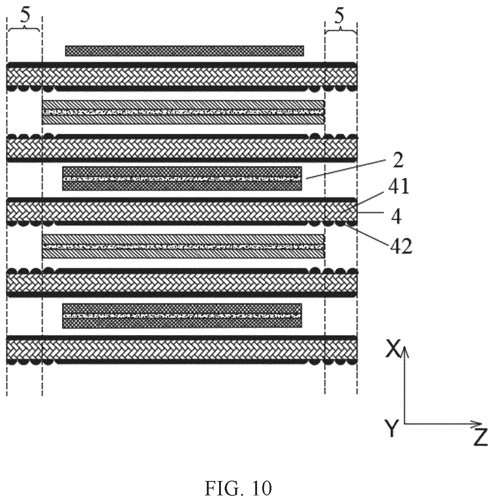

In some embodiments of this application, as shown in FIG. 10, the electrode assembly 1 is of a laminated structure, and the separator extension part 5 extends beyond the separator 4 in the first direction. The first direction is the Z direction, and the first direction is perpendicular to a thickness direction (the X direction) of the electrode assembly 1. This structure can synergistically improve the ion transport channels and the electron transport channels between the separator and the electrode plate, reducing the risks of lithium precipitation and the formation of the dead lithium area at the negative electrode plate of the lithium-ion battery in the laminated structure, thereby enhancing safety of the lithium-ion battery.

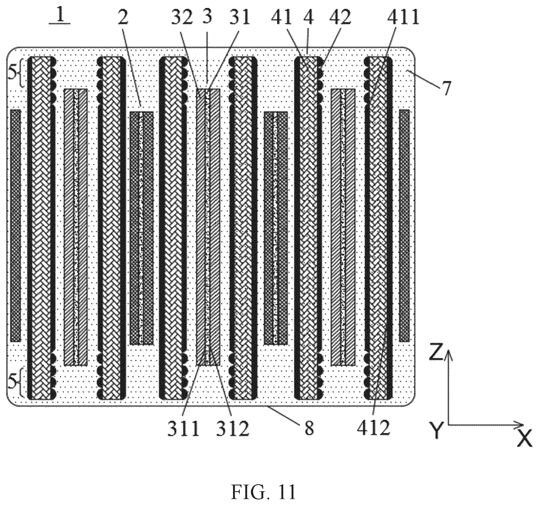

In some embodiments of this application, as shown in FIG. 11, the lithium-ion battery further includes a packaging bag 8, the electrode assembly 1 and the electrolyte 7 is contained within the packaging bag 8, and the electrolyte 7 is at least partially located on an inner surface of the packaging bag 8. The inventors have found through research that more free electrolyte in the packaging bag means a longer cycle life of the lithium-ion battery. However, electrolyte swelling may cause grate thickness and poor safety during drop. The electrolyte is at least partially located on the inner surface of the packaging bag, to help maintain an appropriate amount of the free electrolyte in the packaging bag, thereby balancing the cycling performance and safety performance of the lithium-ion battery.

The positive electrode active material layer of this application includes a positive electrode active material. A type of the positive electrode active material is not particularly limited in this application, as long as the objectives of this application can be achieved. For example, the positive electrode active material may include at least one of lithium nickel manganese cobalt oxide (common examples include NCM811, NCM622, NCM523, and NCM111), lithium nickel cobalt aluminum oxide, lithium iron phosphate, a lithium-rich manganese-based material, lithium cobalt oxide (LiCoO₂), lithium manganate, lithium iron manganese phosphate, or lithium titanate. In this application, the positive electrode active material may further include a non-metal element, for example, fluorine, phosphorus, boron, chlorine, silicon, sulfur, or the like. These elements can further improve stability of the positive electrode active material. Optionally, the positive electrode active material layer may further include a conductive agent and an adhesive. Types of the conductive agent and the adhesive in the positive electrode active material are not particularly limited in this application, as long as the objectives of this application can be achieved. A mass ratio of the positive electrode active material, the conductive agent, and the adhesive in the positive electrode active material layer is not particularly limited in this application, and persons skilled in the art can make selections based on actual needs, as long as the objectives of this application can be achieved. For example, a mass ratio of the positive electrode active material, the conductive agent, and the adhesive in the positive electrode active material layer is (97.5-97.9):(0.9-1.7):(1.0-2.0).

The thickness of the positive electrode active material layer is not particularly limited in this application, as long as the objectives of this application can be achieved. For example, the thickness of the positive electrode active material layer is 30 µm to 120 µm.

Thicknesses of the negative electrode current collector and the negative electrode active material layer are not particularly limited in this application, as long as the objectives of this application can be achieved. For example, the thickness of the negative electrode current collector is 5 µm to 20 µm, and the thickness of the negative electrode active material layer is 30 µm to 120 µm.

Preparation methods of the first adhesive layer and the second adhesive layer are not particularly limited in this application, as long as the objectives of the invention of this application can be achieved. For example, gravure coating can be used for preparation. A method of controlling a dimension of the striped structure in a width direction of the separator is not particularly limited in this application. For example, adjustments may be made based on a dimension of a gravure pattern, to form the separator structure shown in FIG. 1 to 3 in this application. The separator structure shown in the accompanying drawings of this application are merely examples and do not constitute limitations of this application. For example, the thicknesses of the first adhesive layer, the second adhesive layer, the third adhesive layer, and the fourth adhesive layer can be adjusted according to design requirements.

The electrolyte is not particularly limited in this application. Persons skilled in the art can make selections based on actual needs, as long as the objectives of this application can be achieved. For example, at least one of ethylene carbonate (also referred to as ethylene carbonate, EC for short), propylene carbonate (PC), diethyl carbonate (DEC), ethyl propionate (EP), propyl propionate (PP), ethyl methyl carbonate (EMC), dimethyl carbonate (DMC), vinylene carbonate (VC), or fluoroethylene carbonate (FEC) is mixed in a specific mass ratio to obtain a non-aqueous organic solvent, and then a lithium salt is added for dissolving and mixing to uniformity. The "mass ratio" is not particularly limited in this application, as long as the objectives of this application can be achieved. A type of the lithium salt is not limited in this application, as long as the objectives of this application can be achieved. For example, the lithium salt may include at least one of LiPF₆, LiBF₄, LiAsF₆, LiClO₄, LiB(C₆H₅)₄, LiCH₃SO₃, LiCF₃SO₃, LiN(SO₂CF₃)₂, LiC(SO₂CF₃)₃, LiSiF₆, lithium bis(oxalato)borate (LiBOB), or lithium difluoroborate. A concentration of the lithium salt in the electrolyte is not particularly limited in this application, as long as the objectives of this application can be achieved. For example, the concentration of the lithium salt is 1.0 mol/L to 2.0 mol/L.

The packaging bag is not particularly limited in this application. Persons skilled in the art can make selections based on actual needs, as long as the objectives of this application can be achieved. For example, the packaging bag may include an aluminum plastic film or a steel plastic film.

The lithium-ion battery is not particularly limited in this application, and may include an apparatus in which an electrochemical reaction occurs. For example, the lithium-ion battery may include but is not limited to: a lithium metal secondary battery, a lithium-ion secondary battery (lithium-ion battery), a sodium-ion secondary battery, a lithium polymer secondary battery, a lithium-ion polymer secondary battery, or the like.

A preparation method of the secondary battery is not particularly limited in this application, and a known preparation method in the art may be used, as long as the objectives of this application can be achieved. For example, a preparation method of the secondary battery includes but is not limited to the following steps. A positive electrode plate, a separator, and a negative electrode plate are stacked in sequence and undergo operations such as winding and folding as needed, to obtain an electrode assembly in a wound structure. The electrode assembly is put into a packaging bag, and the packaging bag is injected with an electrolyte and sealed to obtain an electrochemical apparatus. Alternatively, a positive electrode plate, a separator, and a negative electrode plate are stacked in sequence, and four corners of the entire laminated structure are fixed with tapes to obtain an electrode assembly in a laminated structure. The electrode assembly is put into a packaging bag, and the packaging bag is injected with an electrolyte and sealed to obtain an electrochemical apparatus.

This application further provides an electrical apparatus, including the secondary battery provided in these embodiments of this application. The secondary battery provided in this application exhibits good cycling performance and expansion property, resulting in a long service life of the electrical apparatus provided in this application.

The electrical apparatus is not particularly limited in this application, and may be a known electrical apparatus used in the prior art. For example, the electrical apparatus may include but is not limited to a notebook computer, a pen-input computer, a mobile computer, an electronic book player, a portable telephone, a portable fax machine, a portable copier, a portable printer, a stereo headset, a video recorder, a liquid crystal television, a portable cleaner, a portable CD player, a mini-disc, a transceiver, an electronic notebook, a calculator, a storage card, a portable recorder, a radio, a standby power source, a motor, an automobile, a motorcycle, a motor bicycle, a bicycle, a lighting appliance, a toy, a game console, a clock, an electric tool, a flash lamp, a camera, a large household storage battery, or a lithium-ion capacitor.

### Examples

The following describes some embodiments of this application more specifically by using examples and comparative examples. Various tests and evaluations are performed in the following methods.

### Test method and device

### Test for peel strength between separator and first negative electrode material layer

In a drying room (with humidity less than 2%), a discharged lithium-ion battery was disassembled, and an undamaged layer of an adhesive interface between a negative electrode plate and a separator was taken out. The layer was quickly sliced into samples with a width of 20 mm with a blade. At least five parallel samples were taken from each battery. A negative electrode plate side of the sample was attached to a steel plate with a double-sided tape, and the steel plate was mounted in a fastening clamp at a lower part of a Gotech tensile testing machine. It was confirmed that the negative electrode plate at the bottom of the sample that was on the steel plate was firmly bonded to the steel plate. A surface separator was teared off about 1 cm along the adhesive interface between the separator and the negative electrode material layer of the negative electrode plate. A corner of the teared separator was clamped by a movable clamp at an upper part of the Gotch tensile testing machine. In this case, the sample preparation was completed. Testing: A pulling angle was 180° and a pulling speed was 50 mm/min. The test continued until the interface between the separator and the sample was completely pulled apart. An average load force (N) in the pulling process was recorded and divided by the width of the negative electrode plate sample (20 mm), to obtain a peel strength between the separator and the negative electrode plate. Then the average value was used. For each sample, a time difference between disassembly of the battery and completion of the test was set to 1 hour.

### Test for peel strength between negative electrode material layer and negative electrode current collector

In a drying room (with humidity less than 2%), a discharged lithium-ion battery was disassembled, and an undamaged negative electrode plate (with two sides coated with a negative electrode material layer) was taken out, and was quickly sliced into samples with a width of 20 mm with a blade. At least five parallel samples were taken from each battery. A negative electrode plate side of the sample was attached to a steel plate with a double-sided tape, and the steel plate was mounted in a fastening clamp at a lower part of a Gotech tensile testing machine. It was confirmed that the bottom of the sample that was on the steel plate was firmly bonded to the steel plate. A corner in a length direction of the sample was teared off about 1 cm along an adhesive interface between the negative electrode plate and the double-sided tape. The teared corner of the negative electrode plate was clamped by a movable clamp at an upper part of the Gotech tensile testing machine. In this case, the sample preparation was completed. Testing: A pulling angle was 180° and a pulling speed was 50 mm/min. The adhesive interface of the sample between the negative electrode plate and the double-sided tape was completely pulled apart. The pulled-off negative electrode material layer was boned to a surface of the double-sided tape. Another side of the pulled-off interface was the negative electrode plate with the negative electrode current collector at least partially exposed. An average load force (N) in the pulling process was recorded and divided by the width of the sample (20 mm), to obtain a peel strength between the negative electrode material layer and the negative electrode current collector. Then the average value was used. For each sample, a time difference between disassembly of the battery and completion of the test was set to within 1 hour.

### Test for cycling interface status

The following operations were performed on a lithium-ion battery in a 25°C environment.
1. The lithium-ion battery was charged. The lithium-ion battery was charged at a constant current of 2.6C to 4.2 V, and charged at the constant voltage to 2.35C; charged at the constant current of 2.35C to 4.25 V, and charged at the constant voltage to 2C; charged at the constant current of 2C to 4.3 V, and charged at the constant voltage to 1.5C; charged at the constant current of 1.5C to 4.38 V, and charged at the constant voltage to 1.2C; charged at the constant current of 1.2C to 4.45 V, and charged at the constant voltage to 1C; and charged at the constant current of 1C to 4.48 V, and charged at the constant voltage to 0.1C. Then the battery was left standing for 10 minutes.
2. The lithium-ion battery was then discharged as follows. The battery was discharged at a constant current of 1.5C to 3.5 V, and discharged at a constant current of 0.7C to 3 V. The battery was left standing for 10 minutes.
3. Steps 1 and 2 were repeated 500 or 1,000 times.
4. The lithium-ion battery was disassembled. Whether black spots and/or purple spots generated on a surface of the negative electrode plate and a degree of lithium precipitation at the negative electrode plate were determined through observation. If 0%<S1/S2≤5%, the lithium precipitation was mild; if 5%<S1/S2≤15%, the lithium precipitation was moderate; and if S1/S2>15%, the lithium precipitation was severe, where S1 is a lithium precipitation area, and S2 is a total of areas of the positive electrode active material layer and the negative electrode active material layer of the negative electrode plate.

### Test for thickness of adhesive layer

The lithium-ion battery was disassembled and the separator was removed from the battery. A section of the separator containing the adhesive layer was made into a sample. A cross-section was prepared along a length or width of the sample. A thickness of each layer at the cross-section was observed and measured with a scanning electron microscope.

### Test for stripe dimension and stripe spacing

The lithium-ion battery was disassembled and the separator was removed from the battery. After a section of the separator containing the adhesive layer was made into a sample, a plane/surface observation sample was prepared. The spacing between stripes of the sample was observed and measured with a scanning electron microscope.

### Example 1

### <Preparation of positive electrode plate>

Lithium cobalt oxide, polyvinylidene fluoride, and conductive carbon black (SP) were mixed in a mass ratio of 97.0:1.5:1.5, and N-methylpyrrolidone (NMP) was added as a solvent, to prepare a slurry with a solid content of 70wt%. Then the slurry was stirred to uniformity. The slurry was evenly applied to one surface of a positive electrode current collector aluminum foil of 10 µm, and was dried at 90°C, to obtain a positive electrode plate with a positive electrode active material layer of 60 µm. Then, the foregoing steps were repeated on another surface of the positive electrode plate, to obtain the positive electrode plate with the two surfaces coated with the positive electrode active material. A positive electrode plate was obtained through cold-pressing and cutting.

### <Preparation of negative electrode plate>

Artificial graphite, styrene-butadiene rubber (SBR), and sodium carboxymethyl cellulose (CMC) were mixed in a mass ratio of 97.4:1.9:0.7, and then deionized water was added, to prepare a slurry with a solid content of 70wt%. Then the slurry was stirred to uniformity. The slurry was evenly applied to one surface of a negative electrode current collector copper foil of 8 µm, and was dried at 85°C to obtain a negative electrode plate with a negative electrode active material layer of 50 µm. Then, the foregoing steps were repeated on another surface of the negative electrode plate, to obtain the negative electrode plate with the two surfaces coated with the negative electrode active material. A negative electrode plate was obtained through cold-pressing, slitting, and cutting of the foregoing negative electrode plate.

### <Preparation of separator>

Preparation of adhesive layer slurry: The following materials were used in a mass ratio of 1% deionized water, 1% sodium carboxymethyl cellulose (CMC), 1% sodium dodecyl sulfate, 70% polyvinylidene fluoride (PVDF), 7% aluminum oxide (Al₂O₃), and 20% N-methylpyrrolidone (NMP) organic solvent. Then, the deionized water, CMC, sodium dodecyl sulfate, and PVDF were mixed, stirred, and dispersed in NMP for 60 min, with a stirring speed of 40 RPM and a dispersion speed of 1,600 RPM, to obtain the slurry.

A single-layer film made of polyethylene (PE) of 5 µm was used as a substrate layer. The adhesive layer slurry was applied to one surface (a third surface) of the substrate layer through gravure coating along a length of the substrate layer, and was dried, to form a first adhesive layer in a form shown in FIG. 4. Then, the adhesive layer slurry was evenly applied to a remaining part of the surface, and was dried to obtain a third adhesive layer, where both the first adhesive layer and the third adhesive layer were of 1.5 µm. Subsequently, the adhesive layer slurry was evenly applied to another surface (a fourth surface) of the substrate layer, and was dried to obtain a fourth adhesive layer of 1.5 µm. A structure of the separator is shown in FIG. 1.

### <Preparation of electrolyte>

EC, DEC, PC, PP, and VC were mixed in a mass ratio of 20:30:20:28:2, to obtain a non-aqueous organic solvent. Then, a lithium salt LiPF₆ and the non-aqueous organic solvent were mixed in a mass ratio of 8:92 to prepare the electrolyte.

### <Preparation of lithium-ion battery>

The positive electrode plate, the separator, and the negative electrode plate prepared above were stacked; the separator was sandwiched between the positive electrode plate and the negative electrode plate for separation; and the surface of the separator with the first adhesive layer facing the negative electrode plate. An electrode assembly was obtained after winding. The structure shown in FIG. 1 was formed, where the dimension by which the separator extension part extends beyond the negative electrode plate was 1.5 mm. The electrode assembly was put into an aluminum-plastic film packaging bag that was filled with the electrolyte after drying, followed by processes such as vacuum packaging, standing, formation, degassing, and cutting to obtain the lithium-ion battery.

### Example 2

Example 2 was the same as Example 1 except for <Preparation of separator>.

### <Preparation of separator>

Preparation of adhesive layer slurry: The following materials were used in a mass ratio of 1% deionized water, 1% CMC, 1% sodium dodecyl sulfate, 70% PVDF, 7% Al₂O₃, and 20% NMP. Then, the deionized water, CMC, sodium dodecyl sulfate, and PVDF were mixed, stirred, and dispersed in NMP for 60 min, with a stirring speed of 40 RPM and a dispersion speed of 1,600 RPM, to obtain the slurry.

A single-layer film made of polyethylene (PE) of 5 µm was used as a substrate layer. The adhesive layer slurry was applied to one surface (a third surface) of the substrate layer through gravure coating along a length of the substrate layer, and was dried, to form a first adhesive layer in a form shown in FIG. 5. Then, the adhesive layer slurry was evenly applied to a remaining part of the surface, and was dried to obtain a third adhesive layer, where both the first adhesive layer and the third adhesive layer were of 1.5 µm. Subsequently, the adhesive layer slurry was evenly applied to another surface (a fourth surface) of the substrate layer, and was dried to obtain a fourth adhesive layer of 1.5 µm. A structure of the separator is shown in FIG. 1.

### Example 3

Example 3 was the same as Example 1 except for <Preparation of separator>.

### <Preparation of separator>

Preparation of adhesive layer slurry: The following materials were used in a mass ratio of 1% deionized water, 1% CMC, 1% sodium dodecyl sulfate, 70% PVDF, 7% Al₂O₃, and 20% NMP. Then, the deionized water, CMC, sodium dodecyl sulfate, and PVDF were mixed, stirred, and dispersed in NMP for 60 min, with a stirring speed of 40 RPM and a dispersion speed of 1,600 RPM, to obtain the slurry.

A single-layer film made of polyethylene (PE) of 5 µm was used as a substrate layer. The adhesive layer slurry was applied to one surface (a third surface) of the substrate layer through gravure coating along a length of the substrate layer, and was dried, to form a first adhesive layer in a form shown in FIG. 4. A thickness of the first adhesive layer is 1.5 µm. Subsequently, the adhesive layer slurry was evenly applied to another surface (a fourth surface) of the substrate layer, and was dried to obtain a fourth adhesive layer of 1.5 µm. A structure of the separator is shown in FIG. 3.

### Example 4 to Example 7

Example 4 to Example 7 were the same as Example 1 except that a thickness of a third adhesive layer was adjusted as shown in Table 2 in <Preparation of separator>.

### Example 8

Example 8 was the same as Example 1 except that thicknesses of a first adhesive layer, a third adhesive layer, and a fourth adhesive layer were adjusted as shown in Table 2 in <Preparation of separator>.

### Example 9

Example 9 was the same as Example 1 except that a mass ratio of artificial graphite, styrene-butadiene rubber, and sodium carboxymethyl cellulose was adjusted to 98.3:1.0:0.7 in <Preparation of negative electrode plate>.

### Example 10

Example 10 was the same as Example 1 except that a mass ratio of artificial graphite, styrene-butadiene rubber, and sodium carboxymethyl cellulose was adjusted to 97.0:2.3:0.7 in <Preparation of negative electrode plate>.

### Example 11

Example 11 was the same as Example 1 except that a mass ratio of artificial graphite, styrene-butadiene rubber, and sodium carboxymethyl cellulose was adjusted to 97.2:2.1:0.7 in <Preparation of negative electrode plate>, and a thickness of a third adhesive layer was adjusted as shown in Table 2 in <Preparation of separator>.

### Example 12

Example 12 was the same as Example 1 except that a mass ratio of artificial graphite, styrene-butadiene rubber, and sodium carboxymethyl cellulose was adjusted to 97.2:2.1:0.7 in <Preparation of negative electrode plate>.

### Example 13

Example 13 was the same as Example 1 except for <Preparation of negative electrode plate>.

### <Preparation of negative electrode plate>

Preparation of conductive adhesive layer: a dispersant lithium carboxymethyl cellulose, conductive carbon black, and an adhesive polyvinylidene fluoride (PVDF) were mixed in a mass ratio of 4:66:30, and then deionized water was added, to prepare a conductive adhesive layer slurry with a solid content of 30wt%. Then the slurry was stirred to uniformity. The conductive adhesive layer slurry was evenly applied to one surface of a negative electrode current collector copper foil of 8 µm, and was dried at 90°C, to obtain a conductive adhesive layer of 1 µm. Then artificial graphite, styrene-butadiene rubber, and sodium carboxymethyl cellulose were mixed in a mass ratio of 98.7:0.6:0.7, and then deionized water was added, to prepare a slurry with a solid content of 70wt%. Then the slurry was stirred to uniformity. The slurry was evenly applied on a surface of the conductive adhesive layer, and was dried at 85°C, to obtain a negative electrode plate with a negative electrode active material layer of 50 µm. Then, the foregoing steps were repeated on another surface of the negative electrode plate, to obtain the negative electrode plate with the two surfaces coated with the negative electrode active material. A negative electrode plate was obtained through cold-pressing, slitting, and cutting of the foregoing negative electrode plate.

### Example 14

Example 14 was the same as Example 3 except for <Preparation of separator> and except that a mass ratio of artificial graphite, styrene-butadiene rubber, and sodium carboxymethyl cellulose was adjusted to 97.8:1.5:0.7 in <Preparation of negative electrode plate>.

### <Preparation of separator>

A single-layer film made of polyethylene (PE) of 5 µm was used as a substrate layer. The adhesive layer slurry was applied to one surface (a third surface) of the substrate layer through gravure coating along a length of the substrate layer, and was dried, to form a first adhesive layer of 1.5 µm in a striped structure. Then, the adhesive layer slurry was applied to a remaining part of the surface through gravure coating, and was dried to obtain a third adhesive layer of 2.5 µm in a striped structure. Subsequently, the adhesive layer slurry was evenly applied to another surface (a fourth surface) of the substrate layer, and was dried to obtain a fourth adhesive layer of 1.5 µm.

### Example 15

Example 15 was the same as Example 1 except that in <Preparation of separator>, dimensions of a first adhesive layer and a third adhesive layer in the Z direction were adjusted to form the separator structure shown in FIG. 2.

### Example 16

Example 16 was the same as Example 1 except that an adhesive layer slurry was applied to a fourth surface of a substrate layer through gravure coating to form a second adhesive layer in a striped structure in <Preparation of separator>. A structure of the separator is shown in FIG. 7.

### Example 17 and Example 18

Example 17 and Example 18 were the same as Example 1 except that a stripe dimension and a stripe spacing were adjusted as shown in Table 2 in <Preparation of separator>.

### Example 19 to Example 22

Example 19 to Example 22 were the same as Example 1 except that a thickness of a first adhesive layer was adjusted as shown in Table 2 in <Preparation of separator>.

### Example 23

Example 23 was the same as Example 13 except that a conductive adhesive layer was not disposed in <Preparation of negative electrode plate>.

### Comparative example 1

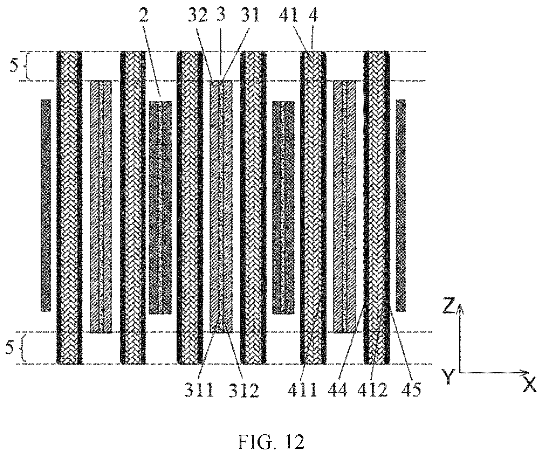

Comparative example 1 was the same as Example 1 except that adhesive layers in a layered structure were evenly formed on two surfaces of a substrate layer in a manner of regular coating in <Preparation of separator>. A structure of the separator is shown in FIG. 12.

### Comparative example 2 and Comparative example 3

Comparative example 2 and Comparative example 3 were the same as Example 1 except that in <Preparation of separator>, thicknesses of a third adhesive layer and a fourth adhesive layer were adjusted, so that a and b were adjusted as shown in Table 1.

### Comparative example 4

Comparative example 4 was the same as Example 1 except that in <Preparation of negative electrode plate>, a negative electrode slurry was prepared through mixing artificial graphite, styrene-butadiene rubber, and sodium carboxymethyl cellulose in a mass ratio of 98.9:0.4:0.7, so that a and b were adjusted as shown in Table 1.

**Table 1**

| Number | Separator structure | a (N/m) | b (N/m) | Whether a is less than b | 500-cycle cycling interface status at 25°C | | 1000-cycle cycling interface status at 25°C | |
|---|---|---|---|---|---|---|---|---|
| Example 1 | Structure shown in FIG. 1 | 6.2 | 19.9 | Yes | No lithium precipitation | Black spots do not occur; and purple spots do not occur | Mild lithium precipitation | Black spots do not occur; and purple spots occur |
| Example 2 | Structure shown in FIG. 1 | 6.2 | 19.9 | Yes | No lithium precipitation | Black spots do not occur; and purple spots do not occur | Mild lithium precipitation | Black spots do not occur; and purple spots occur |
| Example 3 | Structure shown in FIG. 3 | 6.2 | 19.9 | Yes | No lithium precipitation | Black spots do not occur; and purple spots do not occur | Mild lithium precipitation | Black spots do not occur; and purple spots occur |
| Example 4 | Structure shown in FIG. 1 | 8.1 | 19.9 | Yes | No lithium precipitation | Black spots do not occur; and purple spots do not occur | No lithium precipitation | Black spots do not occur; and purple spots do not occur |
| Example 5 | Structure shown in FIG. 1 | 10.0 | 19.9 | Yes | No lithium precipitation | Black spots do not occur; and purple spots do not occur | No lithium precipitation | Black spots do not occur; and purple spots do not occur |
| Example 6 | Structure shown in FIG. 1 | 12.0 | 19.9 | Yes | No lithium precipitation | Black spots do not occur; and purple spots do not occur | No lithium precipitation | Black spots do not occur; and purple spots do not occur |
| Example 7 | Structure shown in FIG. 1 | 13.0 | 19.9 | Yes | No lithium precipitation | Black spots do not occur; and purple spots do not occur | Mild lithium precipitation | Black spots occur; and purple spots do not occur |
| Example 8 | Structure shown in FIG. 1 | 14.8 | 19.9 | Yes | No lithium precipitation | Black spots do not occur; and purple spots do not occur | Mild lithium precipitation | Black spots occur; and purple spots do not occur |
| Example 9 | Structure shown in FIG. 1 | 6.2 | 12.5 | Yes | No lithium precipitation | Black spots do not occur; and purple spots occur | Mild lithium precipitation | Black spots occur; and purple spots occur |
| Example 10 | Structure shown in FIG. 1 | 6.2 | 25.0 | Yes | No lithium precipitation | Black spots do not occur; and purple spots do not occur | Mild lithium precipitation | Black spots do not occur; and purple spots do not occur |
| Example 11 | Structure shown in FIG. 1 | 13.0 | 23.0 | Yes | No lithium precipitation | Black spots do not occur; and purple spots do not occur | No lithium precipitation | Black spots do not occur; and purple spots do not occur |
| Example 12 | Structure shown in FIG. 1 | 6.2 | 23.0 | Yes | No lithium precipitation | Black spots do not occur; and purple spots do not occur | Mild lithium precipitation | Black spots do not occur; and purple spots occur |
| Example 13 | Structure shown in FIG. 1 | 6.2 | 16.0 | Yes | No lithium precipitation | Black spots do not occur; and purple spots do not occur | Mild lithium precipitation | Black spots occur; and purple spots occur |
| Example 14 | Structure shown in FIG. 3 | 11.1 | 15.3 | Yes | No lithium precipitation | Black spots do not occur; and purple spots do not occur | No lithium precipitation | Black spots do not occur; and purple spots do not occur |
| Example 15 | Structure shown in FIG. 2 | 6.2 | 19.9 | Yes | No lithium precipitation | Black spots do not occur; and purple spots do not occur | No lithium precipitation | Black spots do not occur; and purple spots do not occur |
| Example 16 | Structure shown in FIG. 7 | 6.2 | 19.9 | Yes | No lithium precipitation | Black spots do not occur; and purple spots do not occur | No lithium precipitation | Black spots do not occur; and purple spots do not occur |
| Example 17 | Structure shown in FIG. 1 | 7.1 | 19.9 | Yes | No lithium precipitation | Black spots do not occur; and purple spots do not occur | No lithium precipitation | Black spots do not occur; and purple spots occur |
| Example 18 | Structure shown in FIG. 1 | 8.9 | 19.9 | Yes | No lithium precipitation | Black spots do not occur; and purple spots do not occur | No lithium precipitation | Black spots do not occur; and purple spots do not occur |
| Example 19 | Structure shown in FIG. 1 | 6.2 | 19.9 | Yes | No lithium precipitation | Black spots do not occur; and purple spots do not occur | Mild lithium precipitation | Black spots occur; and purple spots occur |
| Example 20 | Structure shown in FIG. 1 | 6.2 | 19.9 | Yes | No lithium precipitation | Black spots do not occur; and purple spots do not occur | Mild lithium precipitation | Black spots do not occur; and purple spots occur |
| Example 21 | Structure shown in FIG. 1 | 6.2 | 19.9 | Yes | No lithium precipitation | Black spots do not occur; and purple spots do not occur | No lithium precipitation | Black spots do not occur; and purple spots do not occur |
| Example 22 | Structure shown in FIG. 1 | 6.2 | 19.9 | Yes | No lithium precipitation | Black spots do not occur; and purple spots do not occur | No lithium precipitation | Black spots do not occur; and purple spots do not occur |
| Example 23 | Structure shown in FIG. 1 | 6.2 | 11.2 | Yes | No lithium precipitation | Black spots occur; and purple spots occur | Mild lithium precipitation | Black spots occur; and purple spots occur |
| Comparative example 1 | Structure shown in FIG. 12 | 6.2 | 19.9 | Yes | Mild lithium precipitation | Black spots do not occur; and purple spots occur | Moderate lithium precipitation | Black spots do not occur; and purple spots occur |
| Comparative example 2 | Structure shown in FIG. 1 | 2.7 | 19.9 | Yes | Moderate lithium precipitation | Black spots do not occur; and purple spots occur | Severe lithium precipitation | Black spots occur; and purple spots do not occur |
| Comparative example 3 | Structure shown in FIG. 1 | 16.0 | 19.9 | Yes | Mild lithium precipitation | Black spots do not occur; and purple spots occur | Moderate lithium precipitation | Black spots occur; and purple spots do not occur |
| Comparative example 4 | Structure shown in FIG. 1 | 6.2 | 6.0 | No | Moderate lithium precipitation | Black spots do not occur; and purple spots do not occur | Severe lithium precipitation | Black spots do not occur; and purple spots do not occur |

**Table 2**

| Number | Stripe dimension (µm) | Stripe spacing (µm) | Thickness of first adhesive layer (µm) | Thickness of second adhesive layer (µm) | Thickness of third adhesive layer (µm) | Thickness of fourth adhesive layer (µm) |
|---|---|---|---|---|---|---|
| Example 1 | 913 | 449 | 1.5 | / | 1.5 | 1.5 |
| Example 2 | 913 | 449 | 1.5 | / | 1.5 | 1.5 |
| Example 3 | 913 | 449 | 1.5 | / | 1.5 | 1.5 |
| Example 4 | 913 | 449 | 1.5 | / | 1.8 | 1.5 |
| Example 5 | 913 | 449 | 1.5 | / | 2.2 | 1.5 |
| Example 6 | 913 | 449 | 1.5 | / | 2.6 | 1.5 |
| Example 7 | 913 | 449 | 1.5 | / | 2.8 | 1.5 |
| Example 8 | 913 | 449 | 1.5 | / | 3.0 | 1.5 |
| Example 9 | 913 | 449 | 1.5 | / | 1.5 | 1.5 |
| Example 10 | 913 | 449 | 1.5 | / | 1.5 | 1.5 |
| Example 11 | 913 | 449 | 1.5 | / | 2.8 | 1.5 |
| Example 12 | 913 | 449 | 1.5 | / | 1.5 | 1.5 |
| Example 13 | 913 | 449 | 1.5 | / | 1.5 | 1.5 |
| Example 14 | 913 | 449 | 1.5 | / | 2.5 | 1.5 |
| Example 15 | 913 | 449 | 1.5 | / | 1.5 | 1.5 |
| Example 16 | 913 | 449 | 1.5 | 1.5 | 1.5 | / |
| Example 17 | 800 | 400 | 1.5 | / | 1.5 | 1.5 |
| Example 18 | 1,000 | 500 | 1.5 | / | 1.5 | 1.5 |
| Example 19 | 913 | 449 | 0.2 | / | 1.5 | 1.5 |
| Example 20 | 913 | 449 | 1.0 | / | 1.5 | 1.5 |
| Example 21 | 913 | 449 | 3.0 | / | 1.5 | 1.5 |
| Example 22 | 913 | 449 | 4.0 | / | 1.5 | 1.5 |
| Example 23 | 913 | 449 | 1.5 | / | 1.5 | 1.5 |
| Comparative example 1 | / | / | / | / | 1.5 | 1.5 |
| Comparative example 2 | 913 | 449 | 1.5 | / | 0.15 | 0.15 |
| Comparative example 3 | 913 | 449 | 1.5 | / | 4.1 | 4.1 |
| Comparative example 4 | 913 | 449 | 1.5 | / | 1.5 | 1.5 |

| | | | | | | |
|---|---|---|---|---|---|---|
| In Table 2, "/" indicates no relevant preparation parameters. | | | | | | |

From Examples 1 to 23 and Comparative examples 1 to 4, it can be learned that an adhesive layer in a striped structure is disposed on one surface of the separator opposite to the negative electrode plate (that is, the third surface), and the relationship between a and b satisfies the range in this application, where a N/m is the peel strength between the separator and the first negative electrode material layer and b N/m is the peel strength between the first negative electrode material layer and the negative electrode current collector. This significantly improves the 500-cycle cycling performance of the lithium-ion battery at 25°C, and the 1000-cycle cycling performance of the lithium-ion battery at 25°C. It can be learned that the solution provided in this application can synergistically improve the ion transport channels and the electron transport channels between the separator and the electrode plate, reducing the risks of lithium precipitation at the negative electrode plate of the lithium-ion battery and the formation of the dead lithium area at the negative electrode plate, thereby enhancing safety of the lithium-ion battery.

From Example 1, Example 9, Example 10, Example 12, Example 13, and Example 23, it can be learned that adjusting b to satisfy that 12.0≤b≤25.0 helps further improve the 1000-cycle cycling performance of the lithium-ion battery at 25°C. In this application, b is adjusted to satisfy the foregoing range, so that the amount of the adhesive is not excessively increased in the negative electrode plate, reducing impact on the relative amount of the active material, and improving an energy density (ED) of the lithium-ion battery.

From Example 1, Examples 4 to 7, and Example 11, it can be learned that adjusting a and b to satisfy that 8.0≤a≤12.0 and 15.0≤b≤20.0 helps further improve the 1000-cycle cycling performance of the lithium-ion battery at 25°C while a high energy density is obtained. Larger a means larger b, but larger b causes greater impact on the ED of the lithium-ion battery. Therefore, in this application, a and b are synergistically adjusted to satisfy the foregoing ranges, to balance the ED of the lithium-ion battery and the relationship between a and b, thereby improving the overall performance of the lithium-ion battery.

From Example 1 and Examples 19 to 22, it can be learned that adjusting the thickness of the first adhesive layer to 1.0 µm to 3.0 µm helps further improve the 1000-cycle cycling performance of the lithium-ion battery at 25°C, and the thickness range helps balance the ED of the lithium-ion battery, facilitating manufacturing.

From Examples 13 and 23, it can be further learned that adding a conductive adhesive layer between the negative electrode active material layer and the negative electrode current collector can further improve the interfacial adhesion performance of the negative electrode plate, thereby further improving the 1000-cycle cycling performance of the lithium-ion battery at 25°C, and helping further enhance safety of the lithium-ion battery.

Usually, the stripe dimension and spacing also affect the performance of the lithium-ion battery. From Examples 1, 17, and 18, it can be further learned that adjusting the foregoing parameters to satisfy the ranges in this application can result in a lithium-ion battery that is in a good interfacial state, thereby enhancing safety of the lithium-ion battery.

In this specification, relational terms such as "first" and "second" are only used to distinguish one entity or operation from another entity or operation, and do not necessarily require or imply that there is any such actual relationship or order between these entities or operations.

The foregoing descriptions are merely preferred embodiments of this application, and are not intended to limit this application. Any modifications, equivalent replacements, improvements, and the like made without departing from the spirit and principle of this application shall fall within the protection scope of this application.

## Claims

1. A secondary battery, comprising an electrode assembly and an electrolyte; wherein the electrode assembly comprises a positive electrode plate, a negative electrode plate, and a separator; the separator is sandwiched between the positive electrode plate and the negative electrode plate to electrically insulate the positive electrode plate from the negative electrode plate; the negative electrode plate comprises a negative electrode current collector and a first negative electrode material layer, the negative electrode current collector comprises a first surface and a second surface opposite to each other, and the first negative electrode material layer is disposed on the first surface; **characterized in that**,
the separator comprises a substrate layer and a first adhesive layer, the substrate layer comprises a third surface and a fourth surface opposite to each other, the third surface faces the negative electrode plate, the first adhesive layer is disposed on the third surface and is of a striped structure, a part of the separator extending beyond the negative electrode plate is defined as a separator extension part, and the first adhesive layer is at least partially located on the separator extension part; and
a peel strength between the separator and the first negative electrode material layer is a N/m, and a peel strength between the first negative electrode material layer and the negative electrode current collector is b N/m, wherein 6.0≤a≤15.0, and a<b.

2. The secondary battery according to claim 1, wherein 12.0≤b≤25.0.

3. The secondary battery according to claim 1, wherein in a thickness direction of the separator, a thickness of the first adhesive layer is 0.2 µm to 4.0 µm.

4. The secondary battery according to claim 1, wherein the first adhesive layer comprises a plurality of stripes, the plurality of stripes are arranged and spaced apart from each other along an arrangement direction of the plurality of stripes; in the arrangement direction of the plurality of stripes, a dimension of the stripe is 800 µm to 1,000 µm, and a spacing between adjacent stripes is 400 µm to 500 µm.

5. The secondary battery according to claim 1, wherein the first adhesive layer comprises a first adhesive;
the substrate layer is a polymer film, a multilayer polymer film, or a non-woven fabric made from any one of the following polymers or a mixture of two or more of the following: polyethylene, polypropylene, polyethylene terephthalate, polybutylene terephthalate, poly(p-phenylene terephthalamide), polyester, polyacetal, polyamide, polycarbonate, polyimide, polyether-ether-ketone, polyetherketoneketone, polyetherimide, polyamideimide, polybenzimidazole, polyethersulfone, polyphenylene oxide, cycloolefin copolymer, polyphenylene sulfide, or polyvinyl naphthalene; and
the first adhesive comprises at least one of homopolymers or copolymers of vinylidene fluoride, hexafluoropropylene, ethylene, propylene, vinyl chloride, allyl chloride, acrylic acid, acrylate, styrene, butadiene, and acrylonitrile.

6. The secondary battery according to claim 5, wherein the first adhesive layer further comprises inorganic particles; wherein
the inorganic particles comprise at least one of boehmite, magnesium hydroxide, aluminum oxide, titanium dioxide, silicon dioxide, zirconium dioxide, tin dioxide, magnesium oxide, zinc oxide, barium sulfate, boron nitride, or aluminum nitride.

7. The secondary battery according to claim 1, wherein the separator further comprises a second adhesive layer, the fourth surface faces the positive electrode plate, and the second adhesive layer is disposed on the fourth surface and is of a striped structure.

8. The secondary battery according to claim 1, wherein the secondary battery satisfies at least one of the following:
(1) 8.0≤a≤12.0 and 15.0≤b≤20.0; or
(2) in a thickness direction of the separator, a thickness of the first adhesive layer is 1.0 µm to 3.0 µm.

9. The secondary battery according to claim 1, wherein the first negative electrode material layer comprises a negative electrode active material and a second adhesive;
the negative electrode active material comprises at least one of a carbon material, a lithium titanate material, or a silicon material; and
the second adhesive comprises at least one of polyacrylate, polyamide, polyimide, polyamide-imide, polyvinylidene fluoride, styrene-butadiene rubber, sodium alginate, polyvinyl alcohol, polytetrafluoroethylene, polyacrylonitrile, lithium carboxymethyl cellulose, sodium carboxymethyl cellulose, or potassium carboxymethyl cellulose.

10. The secondary battery according to claim 9, wherein the first negative electrode material layer comprises a negative electrode active material layer and a conductive adhesive layer stacked together, the conductive adhesive layer is located between the negative electrode active material layer and the negative electrode current collector, and the conductive adhesive layer comprises a conductive agent and a third adhesive;
the conductive agent comprises at least one of conductive carbon black, carbon nanotubes, or graphene; and
the third adhesive comprises at least one of polyacrylate, polyamide, polyimide, polyamide-imide, polyvinylidene fluoride, styrene-butadiene rubber, sodium alginate, polyvinyl alcohol, polytetrafluoroethylene, polyacrylonitrile, lithium carboxymethyl cellulose, sodium carboxymethyl cellulose, or potassium carboxymethyl cellulose.

11. The secondary battery according to claim 1, wherein the separator extension part extends beyond the negative electrode plate by d mm, wherein 0.5≤d≤3.0.

12. The secondary battery according to claim 1, wherein the separator extension part does not overlap with the negative electrode plate in a thickness direction of the electrode assembly.

13. The secondary battery according to claim 1, wherein the electrode assembly is of a wound structure, and the separator extension part extends beyond the separator in a direction of a winding central axis of the electrode assembly; or
the electrode assembly is of a laminated structure, and the separator extension part extends beyond the separator in a first direction, wherein the first direction is perpendicular to a thickness direction of the electrode assembly.

14. The secondary battery according to claim 1, wherein the secondary battery further comprises a packaging bag, the electrode assembly and the electrolyte is contained within the packaging bag, and the electrolyte is at least partially located on an inner surface of the packaging bag.

15. An electrical apparatus, comprising the secondary battery according to any one of claims 1 to 14.
